# EUROPEAN PATENT APPLICATION

(11) **EP 4 846 842 A1**
(43) Date of publication of application: **02.12.2026**
(21) Application number: 25179523.3
(22) Date of filing: 28.05.2025
(51) Int. Cl.: A01K 63/00

(54) **BREEDING INSERT**

(71) Applicant: ECOLE POLYTECHNIQUE FEDERALE DE LAUSANNE (EPFL), 1015 Lausanne (CH)
(72) Inventor: LANG, Florian, 1313 Ferreyres (CH); GEX, Samuel, 1903 Collonges (CH); VALENTIN, Guillaume, 1003 Lausanne (CH); WILLIAUME, Steeve, 39220 Les Rousses (FR); FABBRONI, Nicolas, 1110 Morges (CH)
(74) Representative: KATZAROV S.A.

(57) **Abstract**

The present invention relates to a breeding insert (1) for embryos collection, adapted to be inserted within a housing tank, wherein the breeding insert (1) has a profile adapted to concentrate embryos in direction of its distal end, and wherein the breeding insert (1) comprises: a top wall comprising regularly distributed apertures (4) along its length for collecting embryos, a collection chamber with a curved profile, arranged below the top wall, an extracting means for the extraction of embryos from the collection chamber.

## Description

### Technical Field

The present invention relates to devices to promote spawning and to collect fish embryos.

### Background

Danio rerio, commonly known as zebrafish, is an incredibly popular model organism in life science and pharmaceutical research due to their fast life cycle, high reproduction rates and transparent oviparous embryos.

Additionally, zebrafish and humans share about 70% of their genes, including about 84% of genes associated with human diseases, and researchers have access to a wealth of published genomic information to reference this species.

Zebrafish are thus widely used model organisms in research and require efficient and reliable breeding methods. Traditional breeding techniques often involve stressful handling, such as transfer of the fish from a stock tank to a dedicated breeding tank, and suboptimal spawning conditions, leading to inconsistent scientific results and welfare concerns.

Housing tanks for zebrafish are commonly arranged on multi-rack configuration associated with life support controllers with a pumping and filtration system to ensure a consistent flow to the housing tanks. These multi-rack configurations are presented with open shelving, with rows of housing tanks.

These multi-rack systems have limited space between the top of the housing tanks and the following top shelf. Maintenance and handling of the fish generally requires sliding or removing the housing tank from the shelf.

Zebrafish mate and spawn at dawn. In order to recover the eggs, it is necessary to provide a means of protecting them from being eaten by the parents. A traditional, simple means is to cover the bottom of the tank with a layer of glass marbles and to siphon out the eggs. Breeding traps, consisting essentially of two plastic containers that fit tightly into one another, are more convenient. The inner container holds the fish. Its base has been replaced by a grid, through which the eggs fall into the outer container where they are protected from the fish. Such breeding traps may be placed directly into the aquarium, or, for more efficient egg collection, the fish are taken out of the tank and placed into these containers for mating.

The decisions made about the use of particular methods of breeding are made based on practical considerations or mere habits developed in the given laboratory. Most laboratories employ small, dedicated spawning tanks, measuring only a liter or two in total volume. The uses of dedicated spawning tanks inevitably require fish handling and poor water quality, which are suboptimum breeding conditions, far away from mimicking natural conditions.

Lawrence, C. (2007), "The husbandry of zebrafish (Danio rerio): A review." Aquaculture, 269(1-4), 1-20, provides an overview of zebrafish husbandry practices including breeding technics. The paper mentions the evolution from traditional breeding methods using marbles to dedicated breeding tanks with mesh-bottom inserts.

Adatto et al. (2011), "A New System for the Rapid Collection of Large Numbers of Developmentally Staged Zebrafish Embryos", developed an innovative breeding tool designed to stimulate the natural reproductive behavior of zebrafish and collect large numbers of developmentally synchronized embryos. Key features of this system include: specialized breeding vessel with an outer chamber and a spawning platform, a separator to control fish movement within the vessel and an adjustable water depth mechanism to trigger spawning behavior. This system allows more fish to be bred at once but still requires manual handling, and it is also more difficult to store as the device is quite big.

Gonsar, N. et al. (2012), "An inexpensive, efficient method for regular egg collection from zebrafish in a recirculating system", developed a method that utilizes breeding inserts placed within housing aquarium which remain connected to the recirculating system. This approach enables regular feeding and extended breeding over weeks. which protects eggs from cannibalism.

The apparatus disclosed in WO 2022/164384 is designed for efficient spawning and automatic collection of eggs and live-born aquatic animals. It features a holding tank with housing structures for mating, a porous mesh outlet for egg and offspring removal, an aeration element for water circulation, and a connected collection tank, allowing for simultaneous breeding and offspring collection without manual intervention. While it offers a solution for simultaneous housing, breeding and egg collection, its design is not compatible with existing aquaculture facilities, potentially limiting its adoption in established infrastructures.

The device described in WO 2016/130836 is a spawner for breeding fish and other aquatic species. The spawner includes a vessel, and a platform disposed therein. It is therefore not connected to a filtration unit and needs fish handling from stock tanks to the spawner system.

The apparatus disclosed in US 7255064 solves the problem of collecting large quantities of released aquatic animal eggs after spawning many adults at the same time. The apparatus is simple to build, maintain, and repair. Once again, this is a solution which is not connected to a filtration unit and needs manual handling of fish from stock tanks to the egg collection apparatus.

The present invention suggests a breeding insert designed to be directly inserted in housing tanks arranged in racks, without handling fish.

### Summary

The present invention is directed to a breeding insert for embryos collection, adapted to be inserted within a housing tank, wherein the breeding insert has a profile adapted to concentrate embryos in direction of its distal end, and wherein the breeding insert comprises: a top wall comprising regularly distributed apertures along its length for collecting embryos, a collection chamber with a curved profile, arranged below the top wall, an extracting means for the extraction of embryos from the collection chamber.

According to a characteristic, the thickness of the collection chamber is comprised between 0.5 and 3 centimeters, preferably from 0.5 to 2 centimeters, more preferably from 0.5 to 1 centimeter.

According to a embodiment, the curvature of the collection chamber follows a sigmoid function.

According to another characteristic, the curvature extends or sensibly extends from the proximal to the distal ends of the collection chamber.

According to a further characteristic, the apertures are distributed along or sensibly along the all surface of the top wall.

According to an embodiment, the top wall comprises ribs arranged between apertures.

According to a complementary characteristic the lateral part of the collection chamber comprises lateral holes.

According to the previous characteristic, the dimension of the lateral holes is inferior to those of the apertures.

According to an implementation, the breeding insert comprises a top flange extending from the edge of the collection chamber above the top wall.

According to another characteristic, the breeding insert comprises anchoring means adapted to anchor to an edge of the housing tank.

According to the previous characteristic, the anchoring means extends from the proximal end of the collection chamber.

According to the previous characteristic, the anchoring means comprises a locking bracket formed by a rising portion and a holding portion.

According to an embodiment, the extracting means comprises two interlocking parts, the top wall and the collection chamber.

According to the previous embodiment, the top wall comprises tenons rising from the bottom surface of the top wall, adapted to be locked in correspondent mortises located within the collection chamber.

According to an implementation, the breeding insert comprises two anchoring means delimiting a centered opening, while the top wall comprises a tongue adapted for a shape locking joint with the opening disposed between the two anchoring means.

### Brief description of the drawings

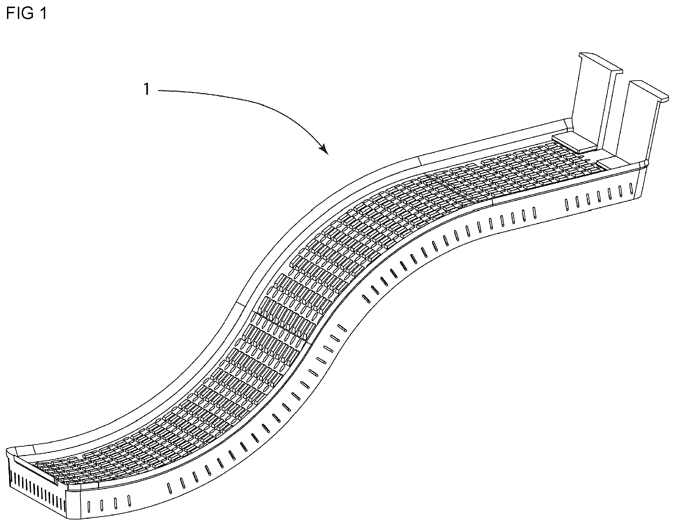

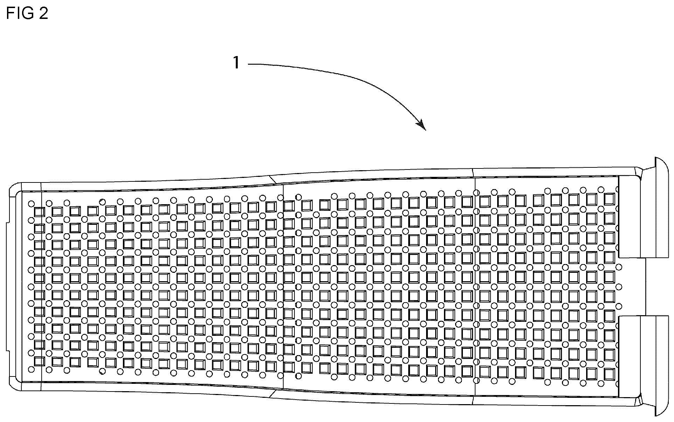

Further particular advantages and features of the invention will become more apparent from the following non-limitative description of at least one embodiment of the invention which will refer to the accompanying drawings, wherein
Figures 1 and 2 illustrate the breeding insert according to one embodiment:
   - Figure 1 is a perspective view,
   - Figure 2 is a top view,
Figures 3 and 4 illustrate the collection chamber of the breeding insert according to the previous embodiment:

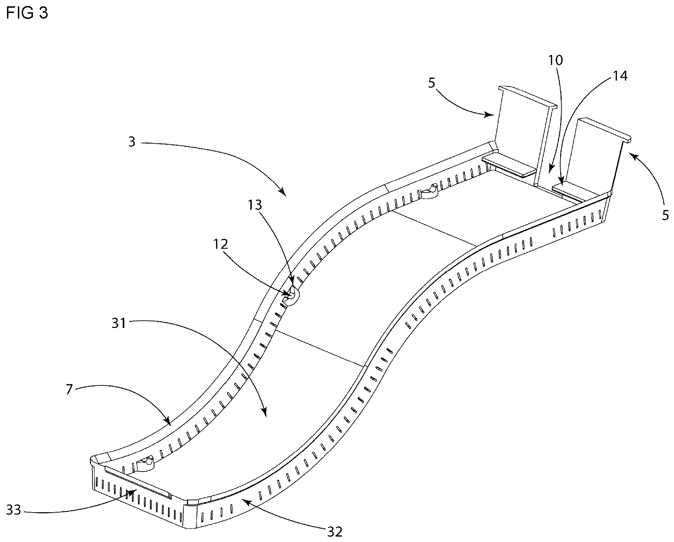

   - Figure 3 is a perspective view.

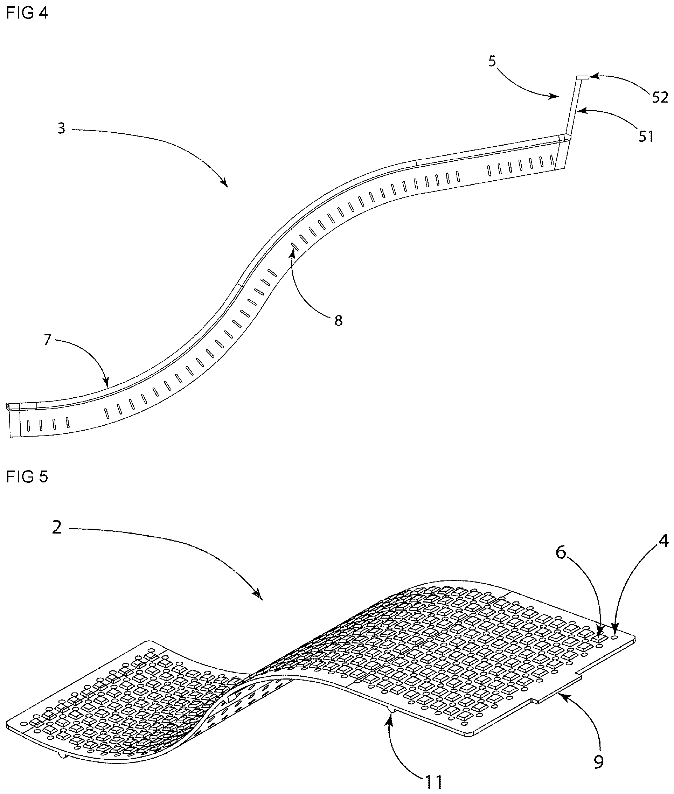

   - Figure 4 is a lateral view.

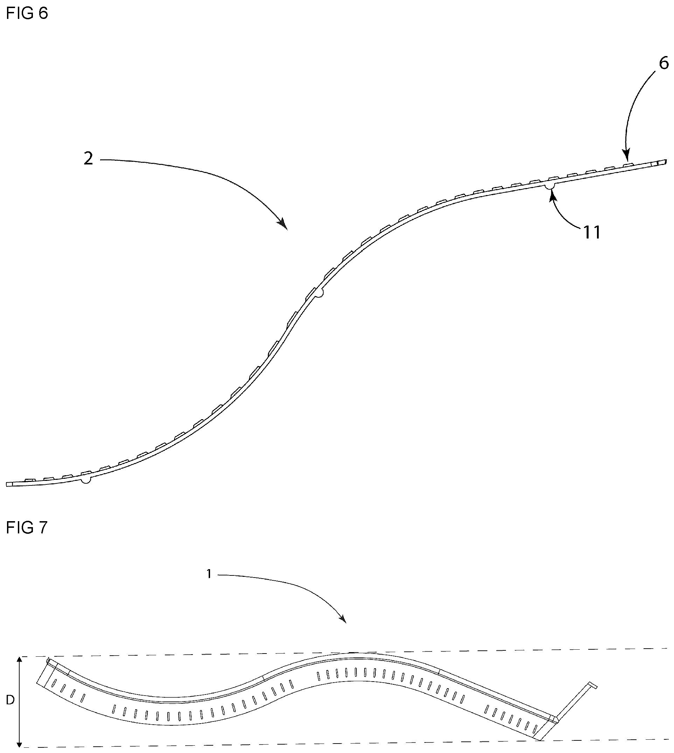

Figures 5 and 6 illustrate the top wall of the breeding insert according to the previous embodiment:
   - Figure 5 is a perspective view.
   - Figure 6 is a lateral view.
Figure 7 illustrates the overall thickness of the longitudinal profile of the breeding insert.

### Detailed description

The breeding insert (1) according to the invention, intended for embryos collection and improving fish welfare, is preferably designed to be inserted into housing tanks that are part of an aquatic housing rack system.

Breeding inserts (1) of the present invention are ideally inserted into or removed from housing tanks without displacing the housing tank from the rack. The breeding insert (1) according to the invention is designed to be inserted within the vertical space between the top edge of the housing tank and the underside of the shelf above it.

The specific structure of the breeding insert (1) which allows the insertion within housing tanks arranged in racks, does not disturb fish housing and reduces the stress associated with conventional transfer into specific breeding tanks.

Indeed, by allowing in-situ breeding directly within the housing tanks, without the need for netting or relocating fish to dedicated breeding tanks, the breeding insert (1) minimizes handling stress, which is crucial for maintaining fish health and reproductive success.

By reducing the need for manual intervention, the breeding insert (1) streamlines egg collection, making the process quicker for facility staff and researchers. This increased efficiency enables personnel to concentrate on other essential tasks.

The specific structure of the breeding insert (1) has also the role to promote fish spawning by reproducing natural spawning behavior of natural habitat, as explained in more detail later in the description.

Another advantage of the breeding insert (1) is that it can be inserted within a housing tank which is connected to a flow though or recirculating filtration system, allowing fish to remain in optimal breeding conditions.

The breeding insert (1) should be fully immersed within the tank, while extending through all the length of the tank, to promote and collect embryos effectively in all the length of the housing tank.

The width of the breeding insert (1) should be slightly smaller than the width of the housing tank, to allow fish to move above the breeding insert (1).

According to one characteristic, the design of the breeding insert (1) ensures that, during insertion, all fish are confined to the upper section of the housing tank, with no possibility of moving to the lower part separated by the insert.

According to the previous characteristic, the specific structure of the curved breeding insert (1) allows to insert the latter within the housing tank, firstly from above down to the bottom of the housing tank in the proximal direction then to slide along the bottom wall of the housing tank, to its distal end to confine the fish above the top wall (2).

Unlike static breeding tanks, the breeding insert (1) integrates seamlessly with existing aquarium filtration systems, ensuring stable water quality throughout the breeding process.

The breeding insert (1) is configured with a thickness sufficiently thin so as not to interfere with the proper placement or sealing of the lid on the housing aquarium when installed.

The breeding insert (1) has a downward curvature that, through the effect of gravity, facilitates the collection of embryos at its distal end, towards the bottom of the housing tank.

The breeding insert (1) should be positioned with its distal end in contact with the bottom of the distal end of the housing tank, while its proximal end is anchored to the proximal edge of the housing tank.

The breeding insert (1) comprises a top wall (2) and a collection chamber (3), as well as an extracting means for the extraction of embryos from the collection chamber (3).

The breeding insert (1) comprises a curvature along its longitudinal profile.

More precisely, the top wall (2) has a curved profile along its longitudinal axis, while the profile of the collection chamber (3) follows or sensibly follows the curvature of the top wall (2).

Even more precisely, as illustrated, the breeding insert (1), the top wall (2) and the collection chamber (3) have a curved profile.

The protected collection chamber (3) in the lower section safeguards eggs from cannibalism, improving embryo survival rates.

The breeding insert (1) advantageously comprises an anchoring means (5) adapted to rest on the proximal end of the housing tank, ensuring stable positioning to an edge of the housing tank.

According to other embodiments, not illustrated, the structure of the breeding insert (1) is designed to rest on the bottom distal end and against the opposite proximal front end of the housing tank, without specific anchoring means on the edge of the housing tank.

It is understood that the breeding insert (1) has a longitudinal profile, wherein the proximal part or proximal direction is defined by the anchoring means (5) or the uppermost portion of the curvature of collection chamber (3), adapted to be positioned at the top of the housing tank and slightly below the water level.

Conversely, the distal part or distal direction is oriented opposite to the anchoring means (5) and corresponds to the lowermost curvature of the collection chamber (3), adapted to be positioned deeper within the housing tank on the side opposite to the proximal end.

The top wall (2) comprises apertures (4) advantageously homogenously distributed along its surface, to efficiently collect embryos into the collection chamber (3).

The apertures (4) are preferably distributed all along the surface and all along the length of the top wall (2) form the proximal to the distal end of the breeding insert (1), as illustrated in figure 2.

The dimension of the apertures (4) is designed to be adapted to the diameter of the embryos of the species to be breed. For example, the diameter of zebrafish embryos is in the range of 0.6 to 1 millimeter.

According to one characteristic, the diameter of the apertures (4) ranges from 1.2 to 2 millimeters.

To promote spawning behavior, the top wall (2) preferably comprises a rough surface.

According to another characteristic, the top wall (2) comprises ribs (6) distributed around the apertures (4), homogenously distributed along its top surface.

The breeding insert (1) thus has a sloped top surface mimicking the zebrafish's preferred natural spawning conditions, addressing the strong preference for specific oviposition sites.

To promote spawning behavior, the top wall (2), from the anchoring means (5) or the top of the breeding insert (1), follows a downward curvature along its longitudinal profile.

According to one embodiment, not illustrated, the curvature is convex and goes downward from the proximal end to the distal end of the top wall (2).

According to the illustrated embodiment, the curvature of the top wall (2) follows a sigmoid function in the longitudinal direction of the top wall (2) profile and comprises a first convex proximal part and a second concave distal part.

To obtain a thin breeding insert (2) that can be inserted without removing or sliding housing tanks within their rack, the collection chamber (3) follows or sensibly follows the curvature of the top wall (2).

According to one embodiment, not illustrated, the collection chamber (3) follows a convex curvature along its longitudinal profile.

According to the illustrated embodiment, the curvature of the collection chamber (3) follows a sigmoid function and comprises a first convex proximal part and a second concave distal part.

A sigmoid function can also be associated with an elongated S shape.

The collection chamber (3) extends from all or sensibly all the length of the top wall (2), to be able to efficiently collect embryos from the all surface of the top wall (2).

Indeed, the breeding insert (1) is preferably designed according to the dimension of the housing tank, to fill all the length of the housing tank, in order to collect embryos from all the length of the housing tank.

The thickness along the curvature of the breeding insert (1) should range from 0.5 to 3 centimeters, preferably from 0.5 to 2 centimeters, more preferably from 0.5 to 1 centimeter.

According to one characteristic, the thickness of the collection chamber (3) ranges from 0.5 to 3 centimeters, preferably from 0.5 to 2 centimeters, more preferably from 0.5 to 1 centimeter.

According to another characteristic, as illustrated in figure 7, the overall thickness (D) along the longitudinal profile of the breeding insert (1) should advantageously range from 0.5 to 3 centimeters preferably from 0.5 to 2 centimeters.

According to the illustrated embodiment, the overall thickness (D) along the longitudinal profile of the breeding insert (1) comprising the anchoring means (5) ranges from 0.5 to 3 centimeters preferably from 0.5 to 2 centimeters.

According to other embodiments, not illustrated, the maximum thickness (D) along the longitudinal profile of the breeding insert (1) without the anchoring means (5) ranges from 0.5 to 3 centimeters preferably from 0.5 to 2 centimeters.

According to the previous characteristic, in the case of a sigmoid function shape, the maximum thickness (D) along the longitudinal profile of the breeding insert (1) can be expressed by the distance between two parallels straight lines, the first one passing by the top distal end to the top of the first proximal curvature, while the second parallel line passing by the bottom distal end of the breeding insert (1), as illustrated in more detail in figure 7.

According to the previous characteristic, in the case of a convex curved breeding insert (1), the maximum thickness (D) along the longitudinal profile of the breeding insert (1) can be expressed by the distance between two parallels straight lines, the first one passing by the bottom distal end to the bottom proximal end, while the second parallel one passing by the edge of the top convex curvature, not illustrated.

The insertion movement of the breeding insert (1) into the housing tank should follow the curvature of the breeding insert (1) or should be inserted diagonally, preferably between the edges of the housing tank and the bottom edge of the following top shelf of the rack.

According to the illustrated embodiment, the collection chamber (3) comprises a bottom wall (31), two lateral walls (32), a distal wall (33) and advantageously a proximal wall.

The two lateral walls (32), the distal wall (33) and the proximal wall extend upward from the bottom wall (31).

According to figure 1, the proximal lateral wall is formed in part by the base of the anchoring means (5).

The top wall (2), the bottom wall (31) and the lateral walls (32, 33) form a container to collect embryos from the apertures (4) of the top wall (2).

The two lateral walls (32), the distal wall (33) and advantageously the proximal wall are considered as lateral parts of the collection chamber (3).

According to the illustrated embodiment, especially illustrated in figure 1, the lateral walls (32, 33) are extended upward by a flange (7), as explained later in the description.

According to the illustrated embodiment, the breeding insert (1) comprises two interlockings part, namely the top wall (2) and the collection chamber (3).

According to the previous embodiment, the removable top wall (2) from the collection chamber (3) forms an extracting means for the extraction of embryos from the collection chamber (3).

According to figure 3, the collection chamber (3) comprises two opposite anchoring means (5) forming the proximal wall of the collection chamber (3).

An anchoring means (5) extends upward from the container of the collection chamber (3) and comprises a locking bracket formed by a rising portion (51) and a holding portion (52). The holding portion (52) is adapted to be placed onto the edge of the housing tank.

As illustrated in figure 4, the rising portion (51) and the holding portion (52) are formed by two planar walls.

According to the illustrated embodiment, as most of the housing tanks are flared, the anchoring means (5) make an obtuse angle with the bottom wall (31) in which they are rising from.

According to other embodiments, not illustrated, the anchoring means (5) make a right angle with the bottom wall (31) in which they are rising from.

More precisely, the two anchoring mean (5) delimits an opening (10).

The opening is intended to receive the tongue (9) disposed in continuation of proximal end of the top wall (2), as explained in more detail later in the description.

The top wall (2) and the collection chamber (3) comprise complementary shape locking joint elements.

As illustrated in figure 3, the collection chamber (3) comprises a stop (14) of the top wall (2) to maintain the tops wall (2) in position according to the collection chamber (3).

According to one characteristic, the collection chamber (3) comprises two opposite stop (14) arranged on the proximal lateral wall.

More precisely, each stop (14) is arranged on each anchoring means (5).

Stops (14) are positioned below the base of the flange (7).

The proximal end of the top wall (2) is adapted to slide below the stops (14) against the two anchoring means (5).

As introduced beforehand, the top wall (2) according to the illustrated embodiment, comprises a tongue (9) adapted for a shape locking joint with the opening (10) disposed between the anchoring means (5) of the collection chamber (3).

The tongue (9) is disposed in continuation of proximal end of the top wall (2).

As illustrated in figure 5, the tongue (9) is arranged along the proximal end of the top wall (2), more precisely centered in continuation of its proximal edge.

According to further characteristics, the top wall (2) comprises positioning and resting tenons (11) rising from the bottom surface of the top wall (2), adapted to be locked in correspondent mortises (12) located within the collection chamber (3) as explained later in the description.

The tenons (11) are disposed on the lateral edge of the bottom surface of top wall (2), more precisely perpendicularly to its bottom surface.

The collection chamber (3) thus comprises mortises (12) arranged within plot (3). Plots (13) are located at the junction of the bottom wall (31) and lateral walls (32).

The top wall (2) is thus assembled to the collection chamber (3), by inserting the distal end of the top wall (2) below the stop (14) and by engaging the tenon (11) within the mortises (12), while the tongue (9) is clipped within the opening (10).

The tenon (11) and mortise (12) system ensure that the height of the collection chamber (3) remains constant along the length of the breeding insert (1).

Securely fasten the two interlocking parts of the breeding insert (1) together, ensuring a tight seal while allowing for easy disassembly for embryo collection and cleaning.

The top wall (2) is thus disassembled from the collection chamber (3) by pulling out the tongue (9) out of the opening (10) and the stops (14), and continuing the pulling movement to disengage the tenons (11) from the mortises (12).

The flange (7) prevents embryos from slipping between the edges of the collection chamber and the edge of the aquarium, thereby ensuring that all embryos fall into the collection chamber.

According to another characteristic, the flange (7) is flared to wed the inner wall of the housing tank.

According to other embodiments, not illustrated, the extracting means for the extraction of embryos from the collection chamber (3) is formed by a sliding or a hinge distal wall (33).

According to another characteristic, at least one of the lateral walls (32) and/or the distal wall (33) of the collection chamber (3) comprises lateral holes (8).

The lateral holes (8) have a dimension smaller than the apertures (4), to retain the embryos while adapted for releasing water.

The lateral holes (8) evacuate the water contained within the collection chamber (3) while the breeding insert (1) is removed from the housing tank, to prevent ejection of the embryos from the aperture (4) of the top wall (2).

The breeding insert (1) can be fabricated from various materials, including but not limited to food-grade plastics, ceramics, or corrosion-resistant metals.

The breeding insert (1) may be preferably made out of food-grade polymer materials chosen from polyethylene, polypropylene, polyethylene terephthalate, polyamide or polycarbonate materials.

The breeding insert (1) was tested across multiple zebrafish populations in research facility stock aquariums. Results demonstrated significantly increased spawning rates, improved embryo quality, and reduced handling stress compared to conventional methods.

The breeding insert (1) seamlessly integrated with existing aquarium systems, maintaining water quality without fish handling. Long-term observations showed prevention of egg-bound syndrome and overall improved fish health. We conclude that this breeding insert offers a unique alternative to traditional methods, enhancing zebrafish husbandry standards, research reproducibility, and animal welfare.

The current literature emphasizes the need to use dedicated breeding tanks for setting up crosses in order to benefit from hormonal/pheromone stimulation that improve breeding. Conventional wisdom suggests that connecting an aquarium to a recirculation system would flush out these crucial hormones, potentially reducing embryo production.

However, the uses of the breeding insert (1) results in large quantities of eggs being laid while connected to a recirculation or flow through system, challenging this assumption. This finding indicates that the breeding insert (1) may be particularly effective at creating favorable spawning conditions, even in the absence of concentrated hormones.

While much of the recent research focuses on genetic and genomic approaches to breeding improvement, the results of the present invention highlight the potential significance of physical design elements in enhancing aquaculture breeding efficiency.

## Claims

1. Breeding insert (1) for embryos collection, adapted to be inserted within a housing tank, wherein the breeding insert (1) has a profile adapted to concentrate embryos in direction of its distal end, and wherein the breeding insert (1) comprises:
- A top wall (2) comprising regularly distributed apertures (4) along its length for collecting embryos,
- a collection chamber (3) with a curved profile, arranged below the top wall (2),
- an extracting means for the extraction of embryos from the collection chamber (3).

2. Breeding insert (1) according to claim 1, wherein the thickness of the collection chamber (3) is comprised between 0.5 and 3 centimeters, preferably from 0.5 to 2 centimeters, more preferably from 0.5 to 1 centimeter.

3. Breeding insert (1) of claim 1 or 2, wherein the curvature of the collection chamber (3) follows a sigmoid function.

4. Breeding insert (1) of any of the preceding claims, wherein the curvature extends or sensibly extends from the proximal to the distal ends of the collection chamber (3).

5. Breeding insert (1) of any of the preceding claims, wherein the apertures (4) are distributed along or sensibly along the all surface of the top wall (2).

6. Breeding insert (1) of any of the preceding claims, wherein the top wall (2) comprises ribs (6) arranged between apertures (4).

7. Breeding insert (1) of any of the preceding claims, wherein the lateral part of the collection chamber (3) comprises lateral holes (8).

8. Breeding insert (1) of the preceding claim, wherein the dimension of the lateral holes (8) is inferior to those of the apertures (4).

9. Breeding insert (1) of any of the preceding claims, wherein it comprises a top flange (7) extending from the edge of the collection chamber (3) above the top wall (2).

10. Breeding insert (1) of any of the preceding claims, wherein it comprises anchoring means (5) adapted to anchor to an edge of the housing tank.

11. Breeding insert (1) of the preceding claim, wherein the anchoring means (5) extends from the proximal end of the collection chamber (3).

12. Breeding insert (1) of claim 10 or 11, wherein the anchoring means (5) comprises a locking bracket formed by a rising portion (51) and a holding portion (52).

13. Breeding insert (1) of any of the preceding claims, wherein the extracting means comprises two interlocking parts, the top wall (2) and the collection chamber (3).

14. Breeding insert (1) of the preceding claim, wherein the top wall (2) comprises tenons (11) rising from the bottom surface of the top wall (2), adapted to be locked in correspondent mortises (12) located within the collection chamber (3).

15. Breeding insert (1) of any of the claims 10 to 14, wherein it comprises two anchoring means (5) delimiting a centered opening (10), while the top wall (2) comprises a tongue (9) adapted for a shape locking joint with the opening (10) disposed between the two anchoring means (5).
